# FASCICULE DE BREVET EUROPEEN

(11) **EP 2 201 230 B1**
(45) Date de publication et mention de la délivrance du brevet: **29.05.2013**
(21) Numéro de dépôt: 08842156.5
(22) Date de dépôt: 13.10.2008
(51) Int. Cl.: F01N 3/20, F01N 9/00, F01N 3/28, B01D 53/56, B01D 53/94, F02D 43/00

(54) **PROCEDE DE GESTION D'INJECTION D'UREE DANS UN SYSTEME A REDUCTION CATALYTIQUE SELECTIVE**
VERFAHREN ZUR STEUERUNG DES EINSPRITZENS VON HARNSTOFF IN EIN SELEKTIVES KATALYTISCHES REDUKTIONSSYSTEM
PROCESS FOR CONTROLLING THE INJECTION OF UREA IN A SELECTIVE CATALYTIC REDUCTION SYSTEM

(30) Priorité: 23.10.2007 FR 0758531
(43) Date de publication de la demande: 30.06.2010
(73) Titulaire: Peugeot Citroën Automobiles Société Anonyme, 78140 Vélizy Villacoublay (FR)
(72) Inventeur: MAESSE, Pierre-Henri, F-92500 Rueil Malmaison (FR)
(74) Mandataire: Ménès, Catherine
(86) Numéro de dépôt international: PCT/FR2008/051851
(87) Numéro de publication internationale: WO 2009/053638

(56) Documents cités:
- EP-A- 1 431 533
- EP-A- 1 602 403
- US-A- 5 628 186
- US-A1- 2003 036 841
- US-B1- 6 305 160

## Description

La présente invention se situe dans le domaine des systèmes de traitement de gaz d'échappement installés dans les véhicules automobiles. De manière plus précise, l'invention concerne un procédé de gestion de l'injection d'urée dans un tel système, qui permette d'optimiser le fonctionnement du système de traitement. Le procédé décrit ici trouve une application particulièrement avantageuse, mais non limitative, dans les systèmes de catalyse des oxydes d'azote émis par un moteur, par réduction catalytique sélective, dite SCR.

Le principe d'un système de traitement SCR est de réduire chimiquement les oxydes d'azote NOx en ajoutant un agent réducteur, tel que de l'ammoniac NH₃ contenu dans de l'urée ou dans tout autre agent réducteur, par exemple de l'AdBlue, ou du DeNOXIUM, ou du C-Blue, en amont d'un catalyseur spécifique, dit catalyseur SCR. Un tel système permet aux véhicules, notamment ceux équipés de moteurs diesels, de respecter les niveaux d'émission légalement tolérés, ces niveaux étant de plus en plus bas.

Les oxydes d'azote sont, par exemple, du monoxyde d'azote, du dioxyde d'azote, ou tout autre composé chimique comprenant des molécules d'azote et d'oxygène.

Dans un tel système, l'urée injectée dans la ligne d'échappement est convertie en ammoniac, au cours de deux réactions chimiques successives:
- une première réaction de pyrolyse (NH₂)₂CO -> HNCO + NH₃, puis
- une réaction d'hydrolyse HNCO + H₂O -> CO₂ + NH₃.

L'ammoniac ainsi obtenu réagit alors, dans le catalyseur SCR, avec les oxydes d'azote issus du moteur. En fonction de la composition du flux d'échappement, une ou plusieurs des réactions suivantes peuvent avoir lieu dans le catalyseur :
- une réaction, dite standard SCR, de réduction des monoxydes d'azote : 4 NH₃ + 4 NO + O₂ -> 4 N₂ + 6 H₂O,
- une réaction, dite « fast SCR », de réduction des monoxydes d'azote et des dioxydes d'azote : 4 NH₃ + 2 NO + 2 NO₂ -> 4 N₂ + 6 H₂O. Cette réaction est, certes, plus rapide que la réaction standard, mais elle nécessite une quantité équivalente en monoxydes d'azote et en dioxydes d'azote, et
- une réaction de réduction du dioxyde d'azote uniquement, moins rapide que les précédentes : 8 NH₃ + 6 NO₂ -> 7 N₂ + 12 H₂O.

Etant donné les conditions de réaction imposées par ces réactions chimiques, il apparaît qu'un des enjeux principaux d'un bon fonctionnement d'une réduction catalytique sélective réside dans la température des gaz d'échappement. En effet, cette température doit être suffisamment élevée :
- au niveau de l'injecteur d'urée, pour permettre une bonne décomposition de l'urée en ammoniac, et
- au niveau du catalyseur SCR, pour permettre une catalyse correcte des oxydes d'azote.

On connaît, dans l'état de la technique par example US 2003/0036841 A1, de nombreux systèmes de traitement des oxydes d'azote mettant en oeuvre de l'ammoniac contenu dans de l'urée liquide.

De tels systèmes mettent en oeuvre, par exemple, des stratégies d'injection d'urée au cours desquelles l'urée est injectée uniquement lorsque la température dans la ligne d'échappement est supérieure à une valeur prédéterminée. De tels systèmes, bien que très efficaces lors de phases de roulement sur des longues distances, ou dans des véhicules tels que des poids lourds, se révèlent parfois peu efficaces lorsqu'ils sont installés sur des véhicules légers roulant en milieu urbain. En effet, dans ces conditions de roulage, la température des gaz d'échappement reste relativement basse, du fait de la faible vitesse et des arrêts fréquents du véhicule. En conséquence, l'injection d'agent réducteur s'avère parfois insuffisante pour traiter correctement les oxydes d'azote émis par le moteur.

Les catalyseurs SCR, généralement utilisés dans les systèmes de traitement, sont tels qu'ils peuvent adsorber de l'ammoniac. Ainsi, dans de nombreux systèmes connus, lorsque les conditions de température ne permettent pas d'injecter de l'urée, il est possible d'utiliser l'ammoniac stocké dans le catalyseur pour mettre en oeuvre les réactions chimiques de réduction des oxydes d'azote.

Toutefois, dans de tels systèmes, il est difficile de contrôler la quantité d'ammoniac stockée dans le catalyseur. Dans ce cas, le catalyseur est parfois saturé en ammoniac, ce qui peut conduire à un largage d'ammoniac gazeux dans l'atmosphère. Or, l'ammoniac étant un gaz odorant et irritant un tel dégazage est gênant pour les utilisateurs de véhicule.

Il a également été envisagé, dans certains systèmes, de chauffer les gaz d'échappement, en permanence ou au démarrage, afin de garantir continuellement une température suffisante. Toutefois, ces systèmes présentent généralement le même inconvénient que précédemment décrit, à savoir celui de provoquer régulièrement des dégazages d'ammoniac dans l'atmosphère. En outre, les procédés de chauffage mis en oeuvre sont gourmands en énergie, ce qui conduit à une consommation relativement importante dans le moteur.

La présente invention vise donc à remédier à tout ou partie de ces inconvénients en proposant une stratégie de gestion de l'injection d'urée couplée à un dispositif de chauffage des gaz d'échappement, afin de garantir un traitement optimal des oxydes d'azote tout en limitant la surconsommation de carburant dans le véhicule.

Ainsi, l'invention concerne un procédé de gestion de l'injection d'urée dans un système de traitement d'oxydes d'azote à réduction catalytique sélective, dite SCR, destiné à être installé dans la ligne d'échappement d'un moteur de véhicule automobile, le traitement consistant à réduire chimiquement, dans un catalyseur, dit catalyseur SCR, les oxydes d'azote en ajoutant de l'ammoniac contenu dans l'urée. Le procédé comprend les étapes suivantes :
- on mesure la température des gaz dans la ligne d'échappement du moteur, en amont du catalyseur SCR,
- si la température mesurée est supérieure à une valeur minimale prédéterminée, appelée température minimale d'injection, on commande une injection d'urée,
- si la température mesurée est inférieure à la température minimale d'injection, on met en oeuvre les sous-étapes suivantes :
   o on détermine une masse d'ammoniac stockée dans le catalyseur SCR,
   o on détermine la quantité d'ammoniac nécessaire pour obtenir une conversion des oxydes d'azote supérieure à une valeur prédéterminée,
   o si la masse d'ammoniac stockée dans le catalyseur est inférieure à cette quantité nécessaire, on commande l'activation d'un mode de chauffage des gaz d'échappement. et une injection d'urée dans le système.

Dans la suite de la description, on utilisera la notion de phase chaude et phase froide, qui correspondent à des phases de fonctionnement du véhicule définies en fonction de la température des gaz dans la ligne d'échappement.

Un catalyseur de type SCR possède une capacité de stockage de l'ammoniac. Il est alors possible de mettre en place un principe d'injection de réducteur qui consiste à injecter le réducteur dans les phases chaudes, afin de permettre, d'une part, la réduction des oxydes d'azote par réaction avec l'ammoniac et, d'autre part, le stockage de l'ammoniac dans le catalyseur.

Cette injection de réducteur en phase chaude est permise grâce à la première étape du procédé, au cours de laquelle on mesure la température des gaz dans la ligne d'échappement, ceci afin de déterminer si le système se trouve dans une phase chaude, ou froide.

On a constaté que les réactions chimiques mises en jeu dans un processus de réduction catalytique sélective nécessitaient une température des gaz supérieure à 180°C pour être effectuées dans de bonnes conditions. Une phase chaude sera donc définie, par exemple, comme une phase au cours de laquelle la température des gaz est supérieure à cette valeur de 180°C.

Ainsi, dans un mode de réalisation avantageux de l'invention, la température minimale d'injection est fixée à 180°C.

Selon le même principe, au cours des phases froides, on stoppe l'injection d'urée, et on utilise l'ammoniac stocké dans le catalyseur SCR pour la réduction des oxydes d'azote. Une phase froide correspond, par exemple, à une phase de ralenti du véhicule.

Toutefois, la quantité d'ammoniac stockée n'est parfois pas suffisante pour permettre une conversion correcte des oxydes d'azote pendant toute la phase froide, et donc pour obtenir un taux de conversion souhaité par les constructeurs ou les utilisateurs du véhicule. Or, un des objectifs de l'invention est d'optimiser la conversion des oxydes d'azote issus du moteur, afin de respecter les normes en vigueur. Il est donc nécessaire, lorsque l'ammoniac est stocké en quantité insuffisante, de pouvoir procéder à une injection en dehors des phases chaudes. Pour cela, le procédé est tel qu'on active un mode de chauffage, destiné à augmenter la température des gaz, afin de fournir des conditions correctes de réaction.

La décision d'activer, ou non, le mode de chauffage, est donc prise en fonction d'une efficacité de conversion souhaitée. Les paramètres permettant de décider de cette activation seront ultérieurement détaillés à l'aide de figures.

Un autre objectif de invention est de fournir un procédé de gestion de l'injection d'urée permettant de limiter la surconsommation dans le véhicule. Ainsi, dans une réalisation avantageuse, il est utile de pouvoir limiter la durée d'activation du mode de chauffage au minimum nécessaire.

A cet effet, l'invention concerne, dans une réalisation, un procédé comprenant les étapes suivantes :
- on détermine une quantité maximale d'ammoniac stockable dans le catalyseur SCR,
- on mesure en permanence la quantité d'ammoniac stockée dans le catalyseur et,
- si le mode de chauffage des gaz d'échappement est activé lorsque la quantité stockée atteint la quantité maximale, on commande une désactivation de ce mode de chauffage.

La quantité maximale d'ammoniac est, par exemple, déterminée en fonction d'une relation entre l'efficacité de conversion et la masse d'ammoniac présente dans le catalyseur. La quantité maximale d'ammoniac peut également correspondre à une quantité de saturation du catalyseur, c'est à dire une quantité au-delà de laquelle on assiste à une désorption de l'ammoniac stocké. Cette quantité dépend, par exemple, de la taille et du type du catalyseur SCR utilisé.

Dans cette réalisation, l'étape de mesure de la quantité d'ammoniac est remplacée par une étape de modélisation, à partir de données prédéterminées, de cette quantité d'ammoniac, en fonction de paramètres de fonctionnement du véhicule.

Dans une autre réalisation avantageuse, pour diminuer encore la consommation de carburant, on utilise un modèle d'inertie thermique de la ligne d'échappement pour anticiper l'arrêt du mode chauffage, tout en continuant à injecter du réducteur. Le modèle d'inertie permet, en effet, de déterminer à partir de quel moment la masse d'agent réducteur stockée dans le catalyseur et la température des gaz sont suffisantes pour que, après désactivation du mode de chauffage, la température reste supérieure à la température minimale d'injection pendant un temps suffisant pour permettre d'atteindre la quantité maximale d'ammoniac.

Dans un mode de réalisation de l'invention, l'étape de commande d'une activation et/ou désactivation d'un mode de chauffage comprend la modification d'au moins un paramètre moteur ayant une influence sur la température des gaz d'échappement.

Le paramètre moteur est, par exemple, un taux de circulation des gaz d'échappement ou une phase d'injection de carburant, ou une quantité de carburant injectée.

Ainsi, dans un exemple, l'activation du mode de chauffage consiste en une recalibration du paramètre reflétant le phasage de l'injection et de la boucle d'air. En effet, on a constaté que, en sous calant l'injection principale d'urée, et en augmentant le débit des gaz d'échappement qui sont réinjectés dans les cylindres du moteur, la température des gaz d'échappement augmente.

Dans un autre exemple, l'activation du mode de chauffage consiste à utiliser un injecteur pour injecter dans la ligne d'échappement une quantité de carburant supérieure à la quantité nécessaire pour le bon fonctionnement du moteur. Dans ce cas, une partie de la quantité additionnelle de carburant s'enflamme lors de l'injection dans la ligne d'échappement, provoquant une augmentation des gaz d'échappement.

D'autres avantages et caractéristiques de l'invention apparaîtront avec la description de certains de ses modes de réalisation, cette description étant effectuée à titre non limitatif à l'aide des figures sur lesquelles :
- la figure 1 montre un véhicule diesel dans lequel on met en oeuvre un procédé selon l'invention,
- les figures 2a et 2b montrent l'évolution de certains paramètres moteur au cours d'un cycle de fonctionnement de type NEDC, dans un véhicule ne mettant pas en oeuvre un procédé selon l'invention,
- la figure 3 montre une évolution des paramètres moteur dans le cas de la mise en oeuvre d'un procédé selon l'invention, et
- la figure 4 montre une variation de l'efficacité de conversion des oxydes d'azote dans un catalyseur SCR, en fonction de la masse d'ammoniac stockée dans le catalyseur.

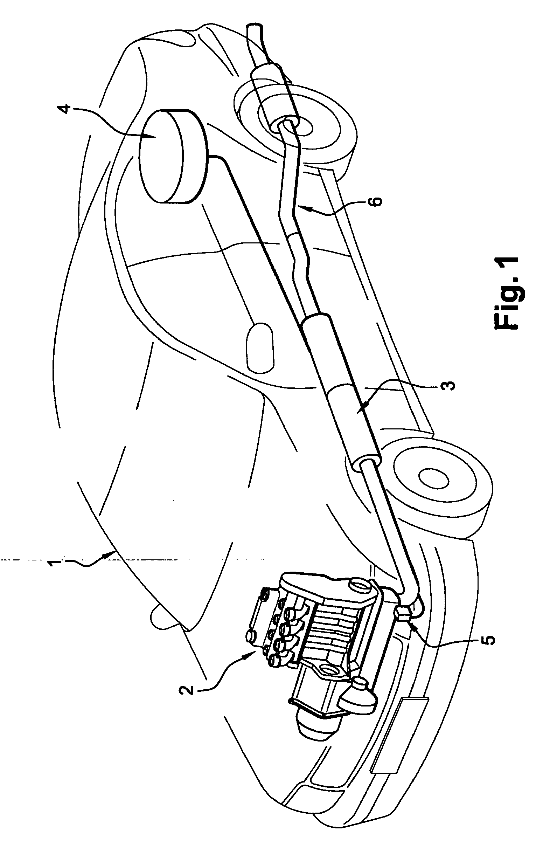

Un procédé selon l'invention est particulièrement adapté pour une utilisation dans un véhicule automobile léger, tel que le véhicule 1 montré sur la figure 1. Pour permettre la mise en oeuvre d'un tel procédé, le véhicule 1 est muni d'un système de traitement des gaz d'échappement issus du moteur 2, ce traitement étant effectué par réduction catalytique sélective dans un catalyseur 3, dit catalyseur SCR, situé dans la ligne d'échappement 6.

Selon les réalisations, le catalyseur SCR peut être placé en amont ou en aval d'un filtre à particules installé dans la ligne d'échappement.

Le traitement consiste en une réduction des oxydes d'azote par un réducteur, par exemple de l'ammoniac contenu dans de l'urée. Ce réducteur est stocké dans un réservoir 4, par exemple situé à l'arrière du véhicule. Au cours du procédé, on injecte le réducteur par l'intermédiaire d'un injecteur 5 situé en amont du catalyseur 3 dans la ligne d'échappement 6.

En outre, il est nécessaire que le véhicule 1 dispose d'un calculateur électronique permettant le pilotage du système SCR. Ce calculateur n'est pas représenté sur la figure 1. Un tel calculateur peut être spécifique à la mise en oeuvre du procédé, ou confondu avec un calculateur moteur déjà présent dans le véhicule.

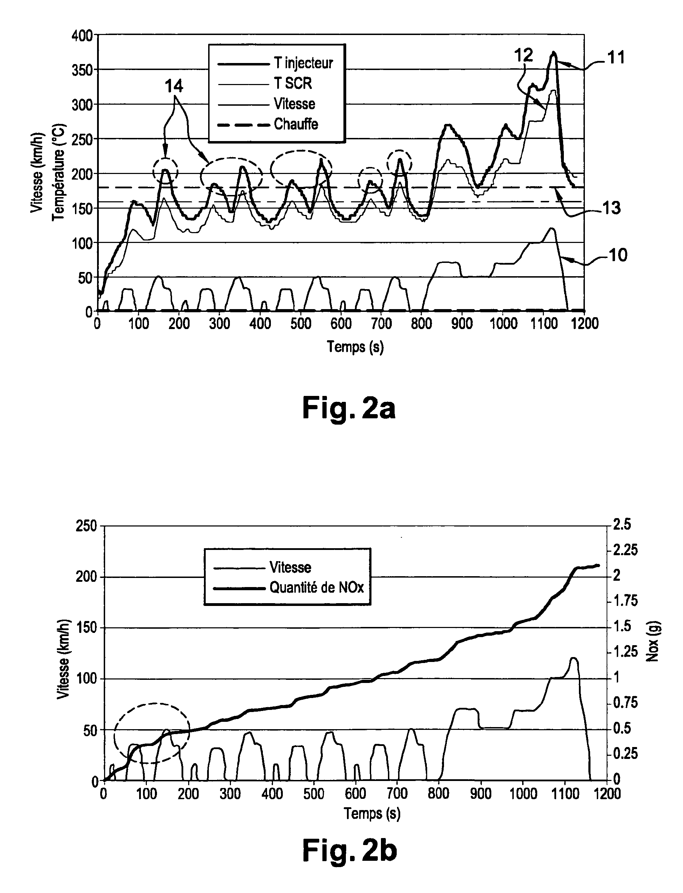

Ainsi que mentionné précédemment, certains des systèmes SCR existants sont pilotés par un procédé ne permettant pas de garantir un approvisionnement suffisant en réducteur pour traiter tous les oxydes d'azote. Une telle situation est illustrée à l'aide des figures 2a et 2b, qui montrent l'évolution de différents paramètres moteur dans un véhicule muni d'un système SCR piloté par un procédé classique d'injection d'urée.

Le graphe représenté sur la figure 2a montre l'évolution de la température d'échappement d'un moteur soumis à un cycle de fonctionnement normalisé, de type NEDC (New European Driving Cycle). Ce cycle de fonctionnement consiste en 4 cycles de fonctionnements urbains, dits cycles ECE ou cycles UDC (Urban Driving Cycle), et d'un cycle de fonctionnement extra-urbain, dit cycle EUDC (Extra-Urban Driving cycle).

Sur cette figure, plusieurs paramètres sont représentés :
- la courbe 10 montre l'évolution de la vitesse du véhicule au cours du cycle de fonctionnement,
- la courbe 11 montre la température au niveau du nez de l'injecteur de réducteur, installé dans la ligne d'échappement,
- la courbe 12 montre la température dans le catalyseur SCR.

Comme décrit précédemment, dans un système de traitement SCR, les réactions chimiques ne peuvent être effectuées correctement qu'à partir d'une certaine température.

Ainsi, les réactions de décomposition de l'urée en ammoniac ne peuvent avoir lieu qu'au delà d'une certaine température au niveau du nez de l'injecteur; les réactions de réduction, quant à elles, ne peuvent avoir lieu qu'au delà d'une certaine température dans le catalyseur SCR.

En conséquence, l'injection d'urée ne doit, en premier lieu, être effectuée qu'au delà de la température minimale requise au niveau du nez de l'injecteur, faute de quoi elle serait inutile. Cette température minimale d'injection, généralement égale à 180°C, est illustrée par le trait horizontal 13.

On constate, au vu de la courbe 11 d'évolution de la température, que sur un cycle de fonctionnement NEDC, entre le démarrage et la 450^{ème} seconde, il n'est possible d'injecter le réducteur qu'à deux reprises. Ces deux occurrences correspondent aux moments où la courbe 11 dépasse la ligne 13, mis en évidence par les cercles 14 sur la figure 2a.

Or, il serait intéressant de pouvoir injecter le réducteur plus tôt dans le cycle, dès l'apparition d'une quantité significative d'oxydes d'azote.

L'évolution de cette quantité d'oxydes d'azote émise au cours du cycle de fonctionnement est illustrée sur la figure 2b. On voit ainsi que, dès la 50^{ème} seconde du cycle, la quantité d'oxydes émise dépasse 0.25 grammes, ce qui représente une valeur non négligeable. En conséquence, il serait utile de pouvoir commencer à réduire les oxydes d'azote dès cet instant.

En outre, le cycle NEDC est tel qu'il contient de nombreuses décélérations, au cours desquelles la température dans la ligne d'échappement diminue fortement. En conséquence, l'injection de réducteur sur les quatre cycles urbains du cycle NEDC risque d'être insuffisante pour traiter correctement l'ensemble des oxydes émis par le moteur.

Le procédé objet de l'invention vise donc à remédier à cet inconvénient en activant un mode de chauffage pour assurer la vaporisation et la décomposition du réducteur, de manière à pouvoir procéder à des injections plus fréquentes.

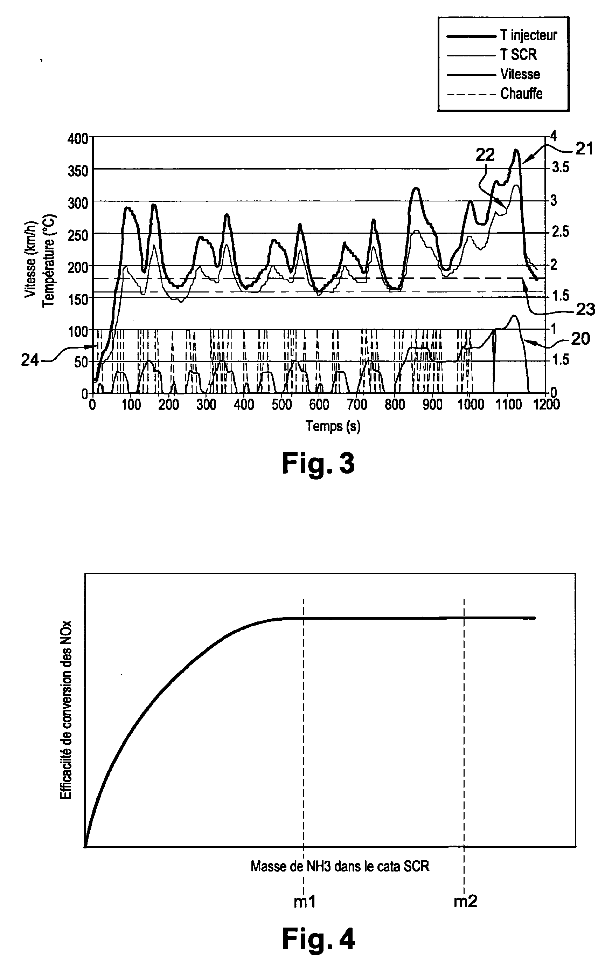

La figure 3 illustre ainsi l'évolution des paramètres moteur dans un véhicule dans lequel le système SCR est piloté en utilisant un procédé conforme à l'invention.

Sur cette figure, les courbes montrent l'évolution de paramètres moteur, de manière similaire à la figure 2a, à savoir :
- la courbe 20 montre l'évolution de la vitesse du véhicule au cours du cycle de fonctionnement,
- la courbe 21 montre la température au niveau du nez de l'injecteur de réducteur, installé dans la ligne d'échappement,
- la courbe 22 montre la température dans le catalyseur SCR, et
- la ligne 23 représente la température minimale d'injection.

Le trait pointillé 24 montre l'activation et la désactivation du mode de chauffage : lorsque le trait est à la valeur 1, cela signifie que le chauffage est activé.

On constate alors, sur cette figure, que la température au niveau du bec d'injecteur augmente fortement dès le début du cycle de fonctionnement, pour dépasser la température minimale d'injection de réducteur dès la 50^{ème} seconde.

Toutefois, dans un procédé selon l'invention, l'activation du mode de chauffage ne dépend pas uniquement de la température des gaz, puisque l'invention vise également à limiter la surconsommation, en activant le chauffage uniquement lorsque cela s'avère réellement nécessaire.

En effet, les catalyseurs SCR généralement utilisés dans le cadre de systèmes de traitement SCR possèdent une capacité de stockage d'ammoniac. Ainsi, cet ammoniac stocké peut donc être utilisé pour réduire les oxydes d'azote, même lorsque aucun réducteur n'est injecté.

Ainsi, pour optimiser la conversion des oxydes tout en limitant la consommation, le procédé est tel que l'on active le mode de chauffage uniquement lorsque la quantité d'ammoniac stockée ne permet pas d'assurer une efficacité de conversion prédéterminée.

La masse d'ammoniac permettant d'assurer cette efficacité est déterminée à l'aide d'un graphe prédéterminé d'évolution de l'efficacité de conversion des oxydes en fonction de la masse, tel que celui montré sur la figure 4.

La courbe 30 montre cette évolution, et permet de déterminer la masse minimale m₁, nécessaire pour obtenir l'efficacité généralement souhaitée dans un moteur de véhicule.

Il est également possible de déterminer une capacité maximale de stockage m₂, au-delà de laquelle on assiste à une désorption de l'ammoniac dans l'atmosphère, relativement inconvenante pour les utilisateurs de véhicule.

Ainsi, dans une mise en oeuvre particulièrement avantageuse de l'invention, lorsque les conditions de température nécessaires à l'injection d'urée ne sont pas remplies, le mode de chauffage est activé dès lors que la masse d'ammoniac stockée dans le catalyseur est inférieure à m₁. Ce mode de chauffage est ensuite désactivé lorsque la masse dépasse m₂.

En outre, comme précédemment mentionné, il est possible de limiter encore la consommation de carburant en utilisant un modèle d'injection thermique permettant d'anticiper l'arrêt du mode de chauffage.

Dans le mode de réalisation illustré par la figure 3, le mode de chauffage n'a pas été activé au maximum, de manière à conserver un compromis conversion/consommation correct.

Il apparaît alors que, malgré l'activation du mode de chauffage, la température des gaz reste parfois inférieure à la température minimale d'injection, notamment lors des ralentis. Dans ce cas, seul l'ammoniac stocké dans le catalyseur est utilisé pour la réduction des oxydes d'azote.

L'invention permet donc d'améliorer nettement l'efficacité de conversion des oxydes d'azote sur un cycle NEDC, sans toutefois modifier des pièces du véhicule ; en effet, l'activation et la désactivation du mode de chauffage consistent en un réglage différent de certains paramètres moteur, et il n'est donc pas nécessaire de modifier la structure du véhicule ou du système SCR pour mettre en oeuvre cette invention.

En outre, ce procédé permet cette amélioration sans toutefois augmenter la consommation de manière considérable, assurant ainsi un bon compromis entre la conversion des oxydes et la consommation engendrée par la mise en oeuvre du procédé.

## Revendications

1. Procédé de gestion de l'injection d'urée dans un système de traitement d'oxydes d'azote à réduction catalytique sélective, dite SCR, destiné à être installé dans la ligne d'échappement (6) d'un moteur (2) de véhicule automobile (1), le traitement consistant à réduire chimiquement, dans un catalyseur (3), dit catalyseur SCR, les oxydes d'azote en ajoutant de l'ammoniac contenu dans l'urée, le procédé comprenant les étapes suivantes :
- on mesure la température des gaz dans la ligne d'échappement (6) du moteur (2), en amont du catalyseur SCR (3),
- si la température mesurée est supérieure à une température minimale d'injection de 180° C , on commande une injection d'urée (3),
- si la température mesurée est inférieure à la température minimale d'injection, on met en oeuvre les sous-étapes suivantes :
o on détermine une masse d'ammoniac stockée dans le catalyseur SCR,
o on détermine la quantité d'ammoniac nécessaire pour obtenir une conversion des oxydes d'azote supérieure à une valeur prédéterminée (m₁),
o si la masse d'ammoniac stockée dans le catalyseur est inférieure à cette quantité nécessaire, on commande l'activation d'un mode de chauffage des gaz d'échappement et une injection d'urée dans le système.
- on détermine une quantité maximale (m₂), d'ammoniac stockable dans le catalyseur SCR,
- on mesure en permanence la quantité d'ammoniac stockée dans le catalyseur par modélisation à partir de données prédéterminées en fonction de paramètres de fonctionnement du véhicule et,
- si le mode de chauffage des gaz d'échappement est activé lorsque la quantité stockée atteint la quantité maximale, on commande une désactivation de ce mode de chauffage.

2. Procédé selon la revendication 1, dans lequel la quantité maximale d'ammoniac correspond à une quantité au-delà de laquelle on assiste à une désorption de l'ammoniac.

3. Procédé selon l'une des revendications précédentes, dans lequel l'étape de commande d'une activation et/ou désactivation d'un mode de chauffage comprend la modification d'au moins un paramètre moteur ayant une influence sur la température des gaz d'échappement.

4. Procédé selon la revendication 3, dans lequel le paramètre moteur est compris dans le groupe comprenant un taux de circulation des gaz d'échappement, une phase d'injection de carburant et une quantité de carburant injectée.

## Patentansprüche

1. Verfahren für das Einspritzmanagement von Harnstoff in ein System zur selektiven katalytischen Reduktion von Stickoxiden, das SCR genannt wird, und das für den Einbau in eine Auspuffanlage (6) eines Motors (2) eines Kraftfahrzeuges (1) bestimmt ist, wobei der Vorgang daraus besteht, die Stickoxide in einem Katalysator (3), der SCR-Katalysator genannt wird, chemisch zu reduzieren, indem das im Harnstoff enthaltene Ammoniak zugesetzt wird, und das Verfahren die folgenden Schritte umfasst:
- man misst die Temperatur der in der Auspuffanlage (6) des Motors (2) enthaltenen Gase vor dem SCR-Katalysator (3),
- wenn die gemessene Temperatur über einer Mindesteinspritztemperatur von 180°C liegt, steuert man eine Harnstoff-Einspritzung (3) an,
- wenn die gemessene Temperatur unter der Mindesteinspritztemperatur liegt, kommen die folgenden Sub-Schritte zur Anwendung:
- man bestimmt eine im SCR-Katalysator gelagerte Masse an Ammoniak,
- man bestimmt die Menge an Ammoniak, die benötigt wird, um eine Umwandlung der Stickoxide über einem vorbestimmten Wert (m₁) zu erhalten,
- wenn die im SCR-Katalysator gelagerte Masse an Ammoniak kleiner ist, als diese benötigte Menge, steuert man die Aktivierung eines Modus zum Erhitzen der Auspuffgase, sowie eine Harnstoff-Einspritzung in das System an.
- man bestimmt eine maximale Menge (m₂) an Ammoniak, die im SCR-Katalysator gelagert werden kann,
- man misst permanent die im Katalysator gelagerte Menge an Ammoniak durch eine Modellierung ausgehend von vorbestimmten Daten in Abhängigkeit von den Betriebsparametern des Fahrzeuges, und
- wenn der Modus zum Erhitzen der Auspuffgase aktiviert ist, wenn die gelagerte Menge den maximalen Mengenwert erreicht, wählt man eine Deaktivierung dieses Erhitzungsmodus an.

2. Verfahren nach Anspruch 1, bei dem die maximale Menge an Ammoniak einer Menge entspricht, über der es zu einer Desorption des Ammoniaks kommt.

3. Verfahren nach einem der vorherigen Ansprüche, bei dem der Schritt zum Ansteuern einer Aktivierung und/ oder Deaktivierung eines Erhitzungsmodus die Veränderung zumindest eines Motorparameters umfasst, der einen Einfluss auf die Temperatur der Auspuffgase ausübt.

4. Verfahren nach Anspruch 3, bei dem der Motorparameter in einer Gruppe enthalten ist, die sich aus der Zirkulationsrate der Abgase, einer Einspritzphase von Kraftstoff und einer Menge an eingespritztem Kraftstoff zusammensetzt.

## Claims

1. Process for controlling the injection of urea in a selective catalytic reduction nitrogen oxide treatment system, referred to as SCR, intended to be installed in the exhaust line (6) of a motor vehicle (1) engine (2), with the treatment consisting in chemically reducing, in a catalyst (3), referred to as an SCR catalyst, the nitrogen oxides by adding ammonia contained in urea, with the process comprising the following steps:
- the temperature of the gases in the exhaust line (6) of the engine (2), upstream of the SCR catalyst (3), is measured,
- if the temperature measured is above a minimum injection temperature of 180°C, an order to inject urea (3) is given,
- if the temperature measured is below the minimum injection temperature, the following substeps are carried out:
- a mass of ammonia stored in the SCR catalyst is determined,
- the amount of ammonia required to obtain a nitrogen oxide conversion greater than a predetermined value (m₁) is determined,
- if the mass of ammonia stored in the catalyst is below this required amount, an order is given to activate a method of heating the exhaust gases, and to inject urea into the system.
- a maximum quantity (m₂), of ammonia that can be stored in the SCR catalyst is determined,
- the quantity of ammonia stored in the catalyser is constantly measured by modelling using predetermined data according to the operating parameters of the vehicle and,
- if the method of heating the exhaust gases is active when the quantity stored reached the maximum quantity, an order is given to deactivate this method of heating.

2. Process according to claim 1, wherein the maximum quantity of ammonia corresponds to a quantity above which a desorption of the ammonia occurs.

3. Process according to one of the preceding claims, wherein the step of ordering an activation and/or deactivation of a method of heating comprises the modification of at least one engine parameter having an influence on the temperature of the exhaust gases.

4. Process according to claim 3, wherein the engine parameter is included in the group comprised of a rate of circulation of the exhaust gases, a fuel injection phase and a quantity of fuel injected.
